# EUROPEAN PATENT APPLICATION

(11) **EP 2 607 446 A1**
(43) Date of publication of application: **26.06.2013**
(21) Application number: 11194381.7
(22) Date of filing: 19.12.2011
(51) Int. Cl.: C09K 8/506, C09K 8/512

(54) **Method for consolidating and/or sealing a void in a subsurface formation**

(71) Applicant: Shell Internationale Research Maatschappij B.V., 2596 HR The Hague (NL)
(72) Inventor: van Eijden, Gerbrand Jozef Maria, 2288 GS Rijswijk (NL); Rao, Kosuri Venkata Narasimha, Bangalore- 5600048 Karnataka State (IN)
(74) Representative: Matthezing, Robert Maarten

(57) **Abstract**

A subsurface formation is consolidated and/or sealed by injecting a liquid bio-mimetic adhesive into the formation, which adhesive then solidifies within the formation and/or within voids, such as micro-annuli between a cement lining around a well casing and the formation.

The bio-mimetic adhesive may be substantially similar to a water resistant organic adhesive segregated by the mouth of a sandcastle worm known as Phragmatopoma Californica, which adhesive solidifies in an alkaline environment.

## Description

### BACKGROUND OF THE INVENTION

The invention relates to a method for consolidating a subsurface formation and/or sealing a void in such a formation, such as a void provided by a micro-annulus between the formation and a cement lining surrounding a casing in an oil and/or gas production gas well.

Chemical sand consolidation techniques are not found to be cost-effective in high water cut wells. Pre-flush operations required to get rid of near wellbore water before glue placement are expensive. Most chemical treatments are not water tolerant and fail at high water-cut. Also, there are Health Safety and Environmental (HSE) issues with respect to handling of toxic epoxy resins onsite.

Sealing systems for repairing micro-annuli in oil and gas wells under downhole conditions have not been found to be effective in a wet environment. Currently, epoxy based resins are usually pumped into the well to fill the micro-annuli gaps between the non-uniform and discontinuous cement behind the casing and the formation.

The medical and underwater use of a synthetic bio-mimetic adhesive for joining broken human bones is described in US patent application US2010120923 and in the paper "Bio-mimetic Underwater Adhesives with Environmentally Triggered Setting Mechanisms" presented by Hui Shao and Russell J. Stewart of the Department of Bioengineering, University of Utah, Salt Lake City, UT 84112,USA. This paper is stored at internet site: http://www.ncbi.nlm.nih.gov/pubmed/20217779 .

The composition of this synthetic bio-mimetic glue has also been published in 2010 in the journal of Advances in Colloid and Interface Science.

The cited paper, journal and patent application are incorporated herein to an extend permitted by law and solely indicate that in the described medical technique for bonding broken human bones a bio-mimetic adhesive is used that is derived from a water resistant organic adhesive segregated from the mouth of the sandcastle worm biologically known as Phragmatopoma Californica.

The sandcastle worm lives in protective tubular shells, which it assembles underwater by bonding sand and seashell hash with a proteinaceous adhesive. To build underwater sandcastles, the worm had to solve three major problems:
1) its adhesive must form strong chemical bonds with wet surfaces and to do so it must displace interfacial water;
2) its water-borne fluid adhesive must not dissolve into the ocean when it is secreted underwater; and
3) setting of the adhesive must be accurately timed.

If it sets too fast, the glue would plug up the worm's adhesive ducts, an obvious problem, while setting too slowly would be inefficient.
The sandcastle glue is composed of oppositely charged proteins and calcium and magnesium ions.

A high proportion of charged sidechains (phosphates and amines) and dihydroxyphenyl-alanine (dopa) residues with catechol sidechains help the adhesive breech the interfacial water barrier to solve the first problem. Dopa residues have been implicated as promoters of strong adhesion to wet metal oxide surfaces.

To solve the second problem, the oppositely charged proteins may associate electrostatically into a dense cohesive fluid-a complex coacervate that is partially immiscible in water, yet spreads over and wets submerged surfaces.

Glue protein analogues synthesized as water-soluble acrylates containing phosphate, amine, and catechol sidechains in similar proportions as the natural adhesive proteins condensed into complex coacervates when mixed under the right conditions. Timing the hardening reaction, the third problem, is likely coupled to the pH differential between secretory granules (pH ≈ 5) and seawater (pH = 8.2). Secretion into seawater triggers a quick set within 30 s followed by slower covalent curing through redox active catechol sidechains.

The cited paper, journal and patent publication do not disclose or suggest that this bio-mimetic glue can be used for consolidating or sealing subsurface formations.

There is a need for water-resistant and non-toxic glue that can help in effective sand consolidation in high water cut wells and also enable good well integrity by robust micro-annuli and other void sealing in oil and gas wells.

### SUMMARY OF THE INVENTION

In accordance with the invention there is provided a method for consolidating and/or sealing a void in a subsurface formation, the method comprising injecting a liquid bio-mimetic adhesive into the void and/or formation; and
inducing the bio-mimetic adhesive solidify.

The composition of the bio-mimetic adhesive may be substantially similar to the composition of a water resistant organic adhesive segregated from the mouth of the sandcastle worm (also known as Phragmatopoma Californica).

The bio-mimetic adhesive may comprise a liquid coacervative and a cross-linker which cross-links and solidifies the coacervative in an alkaline environment, and the bio-mimetic adhesive is injected through a well with a weak or non-alkaline environment into the subsurface formation having an alkaline environment. It is preferred that the alkaline environment in the subsurface formation has a pH above 8.2 and that the weak or non-alkaline environment in the well has a pH below 8.2.

These and other features, embodiments and advantages of the method according to the invention are described in the accompanying claims, abstract and the following detailed description of non-limiting suitable embodiments.

### DETAILED DESCRIPTION OF SUITABLE EMBODIMENTS

The use of the water-resistant and non-toxic bio-mimetic glue for consolidating a subsurface formation and/or its application for sealing the micro-annuli in accordance with the invention provides an effective sand consolidation in high water cut wells and improves well integrity by robust micro-annuli sealing.

Known chemical sand consolidation treatments require pre-flush operations to get rid of the water in the near wellbore region before pumping the glue.
An improvement provided by the method according to the present invention to this invention is that a bio-mimetic glue substantially similar to the glue produced by the sandcastle worm will obviate the need for an expensive pre-flush operations.

Known epoxy based resins to fill the micro-annuli gaps between a patchy cement job behind casing and the formation have not been found to work well in a wet environment.

A bio-mimetic glue substantially similar to the glue produced by the sandcastle worm glue will work in wet environments effectively.

The bio-mimetic glue used in the method according to the invention is based on a water-resistant organic adhesive from the mouth of the sandcastle worm, biologically known as Phragmatopoma Californica. This sandcastle worm animal is found offshore California on the sea-bed and protects itself by forming sand castles by glueing sand in a completely wet environment. A bio-mimetic adhesive based on this glue was successfully synthesised by University of Utah in their Bio-engineering department in 2009, which glue is described in US patent application US2010120923 for use as a bio-adhesive to join human bones. Reported values of the synthesized glue's bond strength are ∼ 1.2 MPa and shear modulus ∼ 25 MPa.

In the journal of 'Advances in Colloid and Interface Science' the glue segregated by the mouth of the sandcatle worm is reported as follows:
- P.californica glue Proteins Pc1-3 - Polycation molecules
- O-Phosphoserene - Polyanion molecules
- "Complexed" with Cations Mg+2 & Ca+2 play an important role in adhesion mechanism.

The bio-mimetic glue used in the method according to the invention is similar to the glue segregated by the sandcastle worm and is used for consolidating and/or sealing a subsurface formation. The sealing may involve sealing micro-annuli of abandoned wells and wells with well integrity issues traversing the subsurface formation.

The bio-mimetic glue used in the method according to the invention is water-resistant and organic and may comprise a liquid coacervative and a cross-linker which cross-links and solidifies the coacervative in an alkaline environment. This bio-mimetic adhesive may be injected through a well with a weak or non-alkaline environment into the subsurface formation having an alkaline environment.

It is preferred that the alkaline environment in the subsurface formation has a pH above 8.2 and the weak or non-alkaline environment in the well has a pH below 8.2.

The coacervative preferably is a complex coacervate comprising a polycation, a polyanion and a multivalent cation, wherein the polycation and/or the polyanion comprises at least one fragment having the following chemical composition: 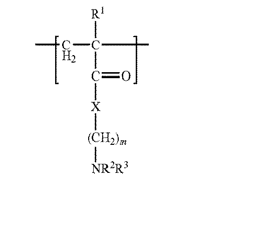 wherein R¹, R² and R³ are, independently, hydrogen or an alkyl group, X is oxygen or NR⁵, where R⁵ is hydrogen or an alkyl group, m is from 1 to 10, or a salt thereof, and at least one of R² or R³ is an actinically cross-linkable group.

The bio-mimetic adhesive used in the method according to the invention may be produced by:
(a) heating an adhesive complex coacervate comprising at least one polycation and at least one polyanion, wherein the polycation and/or polyanion comprises a crosslinker, wherein upon heating the adhesive complex coacervate the coacervate is converted to an insoluble solid; and
(b) crosslinking the polycation and polyanion in the insoluble solid by increasing the pH to produce the adhesive.

The bio-mimetic adhesive may be injected into a hydrocarbon fluid containing formation to consolidate the formation and/or to seal a micro-annulus between a hydrocarbon fluid production well and the hydrocarbon fluid containing formation, wherein hydrocarbon fluid is produced through the hydrocarbon fluid production well from the hydrocarbon fluid containing formation.

Since the glue characteristics are pH dependent, they can be controlled/designed through chemistry during synthesis for operational feasibility. The glue in the mouth of the sandcastle worm is at an acidic pH and the seawater is alkaline (basic pH) and it is this pH transformation that brings about the glue to set.

If the bio-mimetic glue is used for sand consolidation the glue will join loose sand particles together also in formations with high water content thereby rendering a good sand consolidation job and preventing sand from entering wellbore which can cause potential well and surface integrity issues due to erosion.

If the bio-mimetic glue is used for sealing micro-annuli in a wellbore then the glue will form a strong bond between cement surface and formation surface also in presence of water in the micro-annuli.

It is observed that aquifer waters downhole are mostly alkaline.

## Claims

1. A method for consolidating and/or sealing a void in a subsurface formation, the method comprising injecting a liquid bio-mimetic adhesive into the formation and/or void; and
inducing the bio-mimetic adhesive to solidify within the formation and/or void.

2. The method of claim 1, wherein the composition of the bio-mimetic adhesive is substantially similar to the composition of a water resistant organic adhesive segregated by the mouth of a sandcastle worm known as Phragmatopoma Californica.

3. The method of claim 1 or 2, wherein the bio-mimetic adhesive comprises a liquid coacervative and a cross-linker which cross-links and solidifies the coacervative in an alkaline environment, and the bio-mimetic adhesive is injected through a well with a weak or non-alkaline environment into the subsurface formation having an alkaline environment.

4. The method of claim 3, wherein the alkaline environment in the subsurface formation has a pH above 8.2 and the weak or non-alkaline environment in the well has a pH below 8.2.

5. The method of claim 3 or 4, wherein the coacervative is a complex coacervate comprising a polycation, a polyanion and a multivalent cation.

6. The method of claim 5, wherein the polycation and/or the polyanion comprises at least one fragment having the following chemical composition: 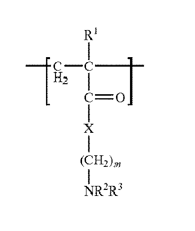 wherein R¹, R² and R³ are, independently, hydrogen or an alkyl group, X is oxygen or NR⁵, where R⁵ is hydrogen or an alkyl group, m is from 1 to 10, or a salt thereof, and at least one of R² or R³ is an actinically cross-linkable group.

7. The method of any one of claims 1-7, wherein the bio-mimetic adhesive comprises oppositely charged proteins and calcium and magnesium ions.

8. The method of any one of claims 1-7, wherein the bio-mimetic adhesive is produced by:
(a) heating an adhesive complex coacervate comprising at least one polycation and at least one polyanion, wherein the polycation and/or polyanion comprises a crosslinker, wherein upon heating the adhesive complex coacervate the coacervate is converted to an insoluble solid; and
(b) crosslinking the polycation and polyanion in the insoluble solid by increasing the pH to produce the adhesive.

9. The method of any one of claims 1-8, wherein the bio-mimetic adhesive is injected into a subsurface hydrocarbon fluid containing formation to consolidate the formation.

10. The method of any one of claims 1-9, wherein the bio-mimetic adhesive is injected into a void provided by a micro-annulus between a hydrocarbon fluid production well and the formation to seal the micro-annulus.

11. The method of claim 10, wherein hydrocarbon fluid is produced through the hydrocarbon fluid production well from the hydrocarbon fluid containing formation.
